# EUROPÄISCHE PATENTSCHRIFT

(11) **EP 3 330 549 B1**
(45) Veröffentlichungstag und Bekanntmachung des Hinweises auf die Patenterteilung: **22.12.2021**
(21) Anmeldenummer: 16201508.5
(22) Anmeldetag: 30.11.2016
(51) Int. Cl.: F16B 11/00, F16B 37/04

(54) **FÜGEVERFAHREN UND VORRICHTUNG ZUR AUSFÜHRUNG DES FÜGEVERFAHRENS**
JOINING METHOD AND APPARATUS FOR PERFORMING SAME
PROCÉDÉ D'ASSEMBLAGE ET DISPOSITIF D'EXÉCUTION DU PROCÉDÉ D'ASSEMBLAGE

(43) Veröffentlichungstag der Anmeldung: 06.06.2018
(73) Patentinhaber: Newfrey LLC, New Britain, CT 06053 (US)
(72) Erfinder: Gramsch-Kempkes, Sascha, 35394 Giessen (DE); Hofman, Alexander, 35394 Giessen (DE); Linke, Matthias, 35394 Giessen (DE); Briel, Karl-Heinz, 35394 Giessen (DE)
(74) Vertreter: SBD IPAdmin

(56) Entgegenhaltungen:
- WO-A1-01/78946
- WO-A1-2006/032954
- DE-A1-102009 042 467
- DE-A1-102012 021 210
- US-A- 4 842 912

## Beschreibung

### Gebiet der Erfindung

Die vorliegende Erfindung betrifft ein Fügeverfahren eines Befestigungselements auf einem Werkstück.

### Hintergrund der Erfindung

Auf dem Gebiet der Technik des Fügens von Befestigungselementen auf Werkstücke ist es bspw. bekannt, metallische Bolzen auf metallische Werkstücke zu schweißen. Dieses als "Bolzenschweißen" bekannte Verfahren wird insbesondere in der Automobilindustrie eingesetzt, um Bolzen auf Karosseriebleche zu schweißen, wobei an den Bolzen anschließend Befestigungsclips aus Kunststoff befestigt werden, an denen Kabel, Leitungen (z.B. elektrische Leitungen und/oder Bremsleitungen) etc. festgelegt werden.

Aufgrund der Tatsache, dass beispielsweise im Karosseriebau von Kraftfahrzeugen vermehrt weniger gut schweißbare bzw. nichtmetallische Verbundmaterialien eingesetzt werden, wie Kunststoffe, Faserverbundbauteile, etc., hat die Klebetechnik sich als Fügeverfahren insbesondere im Karosseriebau etabliert. Anstatt die Bolzen auf Werkstücke zu schweißen, werden diese aufgeklebt.

Aus dem Dokument DE 10 2004 012 786 A1 ist eine Fügevorrichtung zum Befestigen eines Befestigungselements mit einem Fügematerial an einer Trägerfläche eines Werkstücks bekannt. Dabei ist das Befestigungselement mit einem schaftförmigen Ankerabschnitt, einem Flanschabschnitt und einem auf einen Auftragungsabschnitt des Flanschabschnitts vorapplizierten Fügematerial ausgebildet. Ankerabschnitt und Flanschabschnitt sind aus einem induktiv erwärmbaren Material. Das Erwärmen des Fügematerials vor dem Aufsetzen auf die Trägerfläche des Werkstücks erfolgt induktiv, indem über einen induktiven Feldformer Induktionsenergie in den Flanschabschnitt des Befestigungselementes eingeführt wird, so dass Ankerabschnitt und Flanschabschnitt und indirekt hierdurch auch das daran aufgebrachte Fügematerial erwärmt wird. Nach dem Aufbringen des Befestigungselementes auf das Werkstück wird die induktive Energiezufuhr beendet, und der Klebstoff verfestigt sich, um die Klebeverbindung herzustellen.

In der Großserienfertigung ist die zum Durchführen des Fügeverfahrens benötigte Zeitdauer von besonderer Bedeutung. Bisherige Ansätze zum Durchführen von Klebeverfahren benötigen häufig eine Zeitdauer von mehreren Minuten. Dies ist im Vergleich zu dem eingangs genannten Bolzenschweißen deutlich länger, so dass ein Bedarf besteht, diese Zeit zu verkürzen.

Aus dem Dokument DE 10 2009 042 467 A1 ist ein Verfahren zum Fügen eines Befestigungselements auf einen Oberflächenabschnitt eines Bauteils bekannt, wobei das Befestigungselement eine Klebefläche aufweist, auf die ein thermisch schmelz- und aushärtbarer Klebstoff aufgebracht ist, mit den Schritten, den Klebstoff zunächst auf eine erste Temperatur vorzuerwärmen, um diesen zu schmelzen, den Oberflächenabschnitt auf eine zweite Temperatur vorzuerwärmen und die Klebefläche auf den Oberflächenabschnitt aufzusetzen, wobei der Klebstoff nach dem Aufsetzen der Klebefläche auf den Oberflächenabschnitt auf eine dritte Temperatur haupterwärmt wird, um den Klebstoff auszuhärten und damit das Befestigungselement dauerhaft an dem Bauteil zu befestigen. Das Dokument US 4 842 912 A zeigt ein Fügeverfahren nach dem Stand der Technik.

Die verschiedenen Schritte dieses Verfahrens können umständlich sein und es besteht ein Bedarf, solche Verfahren zu vereinfachen und die Zeitdauer noch weiter zu verkürzen, mit gleichzeitig guten Fügeergebnissen. Weiterhin besteht der Bedarf, an einem Verfahren zum Fügen des Befestigungselements, wobei das Befestigungselement eine gute Lagerungsstabilität aufweist und eine unerwünschte chemische Vernetzungsreaktion des Fügematerials vor dem eigentlichen Klebeprozess vermeidet.

Vor dem obigen Hintergrund ist es die Aufgabe der Erfindung, ein verbessertes Fügeverfahren anzugeben, das vorzugsweise die bekannten Fügeverfahren vereinfacht. Zusammenfassung der Erfindung Die oben genannte Aufgabe wird gelöst durch ein Fügeverfahren nach Anspruch 1.

Das Vermischen des Fügematerials durch eine Drehung des Befestigungselements gegenüber dem Werkstück erlaubt ein schnelles Vermischen der zwei Klebstoffmaterialien, ohne Verlust und direkt auf dem Werkstück. Es ist kein Vorbereitungsvorgang nötig und das Fügeverfahren ist einfach und schnell durchzuführen.

Gemäß einer weiteren bevorzugten Ausführungsform wird das Befestigungselement um die Ankerachse gedreht.

In einer bevorzugten Ausführungsform wird das Befestigungselement in einer Halteeinrichtung aufgenommen. Die Halteeinrichtung ist beispielsweise ein Befestigungshalter oder ein Ladestift.

In einer bevorzugten Ausführungsform positioniert die Halteeinrichtung das Befestigungselement auf der Trägerfläche des Werkstücks. Beispielsweise positioniert die Halteeinrichtung das Befestigungselement auf der Trägerfläche des Werkstücks, so dass der Flanschabschnitt des Befestigungselements in Kontakt mit der Trägerfläche ist.

In einer bevorzugten Ausführungsform wird die Drehung des Befestigungselements gegenüber dem Werkstück durch die Halteeinrichtung geführt. Beispielsweise kann die gleiche Halteeinrichtung das Befestigungselement entlang einer Fügeachse und um dieselbe Fügeachse fahren.

Erfindungsgemäß weist das Fügematerial vor dem Fügen ein erstes Klebstoffmaterial und ein zweites anderes Klebstoffmaterial auf. Vor dem Fügen überdeckt das erste Klebstoffmaterial das zweite Klebstoffmaterial vollständig. Ein solches Fügematerial erlaubt eine bessere Lagerstabilität vor dem Fügeverfahren.

In einer bevorzugten Ausführungsform wird das Fügematerial vor der Drehung erwärmt, um das Fügematerial zu schmelzen.

In einer bevorzugten Ausführungsform bilden der Ankerabschnitt und der Flanschabschnitt ein Fügebauteil aus. Die Erwärmung des Fügematerials beinhaltet das Erwärmen des Fügebauteils und/oder des Werkstücks. Eine Wärmeleitung erfolgt von dem Fügebauteil und/oder von dem Werkstück in das Fügematerial.

In einer bevorzugten Ausführungsform wird das Fügematerial über die Schmelzpunkte des ersten und zweiten Klebstoffmaterials erwärmt.

In einer bevorzugten Ausführungsform weist die Trägerfläche Kontaminationen auf, und die Kontaminationen werden während der Drehung des Befestigungselements gegenüber des Werkstücks in dem Fügematerial verteilt, so dass die Trägerfläche gereinigt wird.

In einer bevorzugten Ausführungsform wird das Fügematerial nach dem Vermischen auf eine Vernetzungstemperatur weiter erwärmt, um die Vernetzung des Fügematerials durchzuführen.

In einer bevorzugten Ausführungsform wird während der Vernetzung weiter ein Drehmoment auf das Befestigungselement bis zum Stillstand des Befestigungselements ausgeübt.

In einer bevorzugten Ausführungsform wird die Drehung des Befestigungselements gegenüber dem Werkstück vor dem Fügen gestoppt.

In einer bevorzugten Ausführungsform wird nach dem Fügen eine Drehmomentbeaufschlagung auf das Befestigungselement ausgeübt, um das Kleben des Befestigungselements zu überprüfen.

In einer bevorzugten Ausführungsform weist der Auftragungsabschnitt eine geeignete Oberflächenstruktur auf, so dass die Klebstoffmaterialien sich während der Drehung des Befestigungselements maximal bewegen.

Eine Fügevorrichtung zur Ausführung des Fügeverfahrens ist mit: einer Halteeinrichtung zum Halten eines Befestigungselements, wobei die Halteeinrichtung dafür ausgelegt ist, um eine Fügeachse gedreht zu werden, und einer Steuereinrichtung, um eine Drehung der Halteeinrichtung anzusteuern.

In einer bevorzugten Ausführungsform weist die Fügevorrichtung eine Heizeinrichtung auf, die geeignet ist, das Fügematerial vor und/oder nach und/oder während der Drehung der Halteeinrichtung zu erwärmen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine schematische Ansicht eines Werkstücks und eines Befestigungselements in einer Aufnahme einer Fügevorrichtung;
Fig. 2 eine schematische Ansicht einer Fügevorrichtung gemäß einer ersten Ausführungsform;
Fig. 3 eine schematische Ansicht einer Fügevorrichtung gemäß einer weiteren Ausführungsform;
Fig. 4a einen schematischen Querschnitt eines Befestigungselements mit einem Ankerabschnitt, einem Flanschabschnitt und einem vorapplizierten Fügematerial gemäß einer ersten Ausführungsform;
Fig. 4b einen schematischen Querschnitt eines Befestigungselements mit einem Ankerabschnitt, einem Flanschabschnitt und einem vorapplizierten Fügematerial gemäß einer weiteren Ausführungsform;
Fig. 5a bis Fig. 5d mehrere schematische Darstellungen eines Flanschabschnitts;
Fig. 6 eine graphische Darstellung der Temperatur- und Drehungsteuerung eines erfindungsgemäßen Fügeverfahrens gemäß einer Ausführungsform;
Fig. 7 eine graphische Darstellung der Temperatur- und Drehungsteuerung eines erfindungsgemäßen Fügeverfahrens gemäß einer weiteren Ausführungsform.
Fig. 8a eine Ansicht eines Befestigungselements mit dem Fügematerial gemäß einer Ausführungsform;
Fig. 8b eine Ansicht eines Befestigungselements mit dem Fügematerial gemäß einer alternativen Ausführungsform.

### Detaillierte Beschreibung bevorzugter Ausführungsformen vorliegender Erfindung

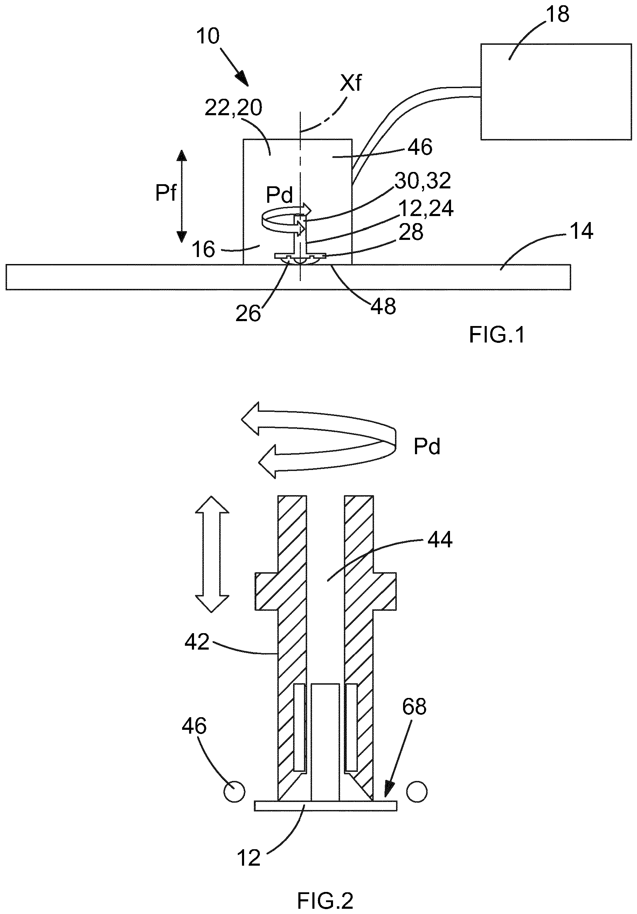

Fig. 1 stellt eine schematische Ansicht einer Fügevorrichtung 10, eines Befestigungselements 12 und eines Werkstücks 14 dar. Die Fügevorrichtung 10 ermöglicht die Ausführung eines Fügeverfahrens eines Befestigungselements 12 auf einem Werkstück 14.

Die Fügevorrichtung 10 beinhaltet eine Halteeinrichtung 16 zum Halten des Befestigungselements 12. Die Halteeinrichtung 16 ist ausgelegt, um eine Fügeachse Xf gedreht zu werden. Die Halteeinrichtung 16 ist weiter ausgelegt, entlang der Fügeachse Xf verfahren zu werden. Ferner weist die Fügevorrichtung 10 eine Steuereinrichtung 18 auf, die mit der Halteeinrichtung 16 verbunden ist und eine Drehung der Halteeinrichtung 16 steuert. Die Halteeinrichtung 16 ist ausgelegt, um das Befestigungselement 12 um die Fügeachse Xf zu drehen, wie es durch einen Doppelpfeil Pd angedeutet ist. Die Halteeinrichtung 16 kann das Befestigungselement 12 auch entlang der Fügeachse Xf fahren, wie es durch einen zweiten Doppelpfeil Pf angedeutet ist. Ein Motor 20 kann die Halteeinrichtung 16 drehen und/oder entlang der Fügeachse fahren. Der Motor 20 ist beispielsweise ein Schrittmotor, aber in anderen Ausführungsformen können andere Steuerungs/Energieversorgungssysteme vorgesehen sein. Ein Drehmomentsensor (oder Drehgeber 22) kann mit dem Motor gekoppelt sein. Der Motor kann mit der Steuereinrichtung 18 verbunden sein, und die Steuereinrichtung steuert die Drehbewegung des Motors 20.

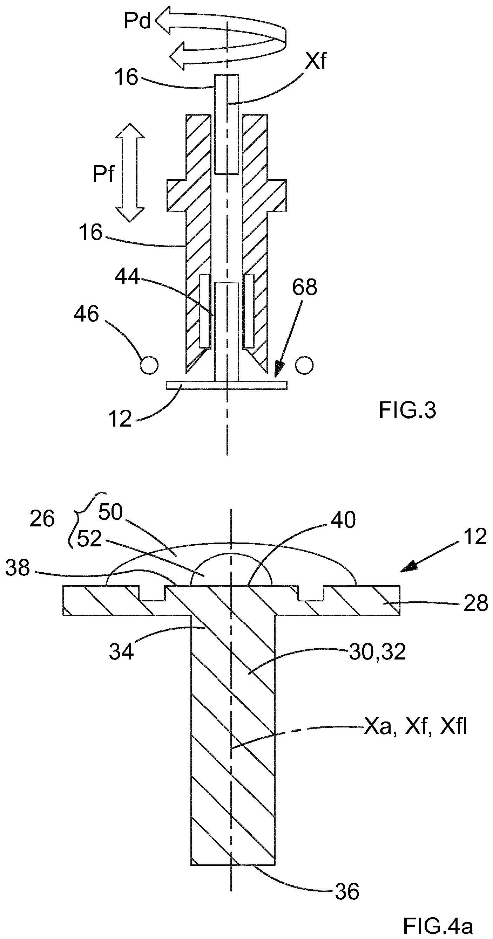

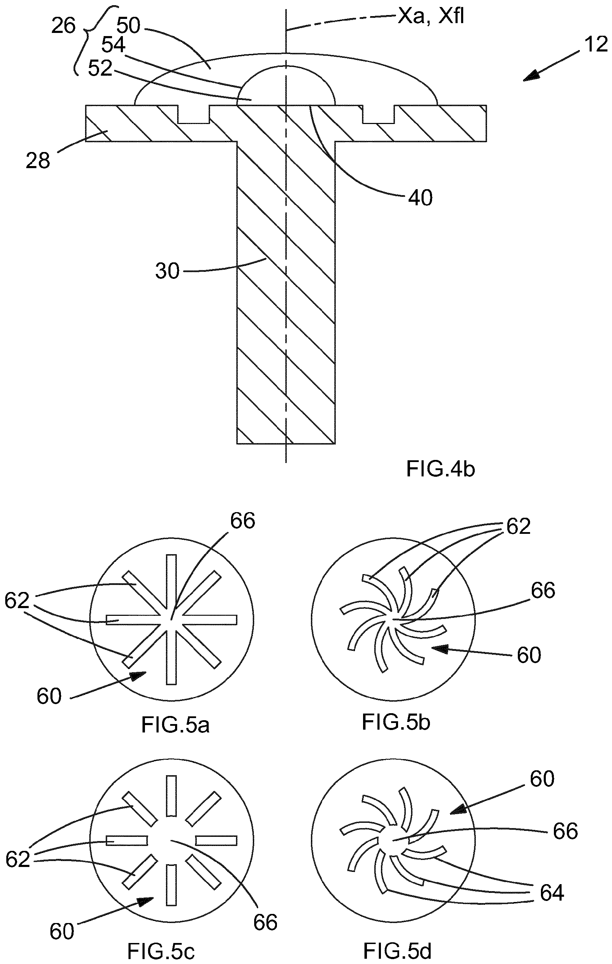

Fig. 4a und Fig. 4b stellen zwei Ausführungsformen des Befestigungselements 12 schematisch im Längsschnitt dar. Das Befestigungselement 12 weist ein Fügebauteil 24 und ein auf das Fügebauteil 24 vorappliziertes Fügematerial 26 auf.

Das Fügebauteil 24 weist einen Flanschabschnitt 28 und einen schaftförmigen Ankerabschnitt 30 auf. Das Fügebauteil 24 ist einstückig.

In einer anderen Ausführungsform kann das Fügebauteil 24 zweiteilig sein. In diesem Fall sind beispielsweise der Flanschabschnitt 28 und der schaftförmige Ankerabschnitt 30 zwei verschiedene Teile, die zusammen verbunden werden.

Der Ankerabschnitt 30 weist einen Grundkörper 32, eine erste und eine zweite Endportion 34, 36 auf. Der Grundkörper 32 erstreckt sich entlang einer Ankerachse Xa zwischen der ersten Endportion 34 und der zweiten Endportion 36. Der Grundkörper 32 des Ankerabschnitts 30 kann jeweils die gewünschte Schaftform annehmen. Wie in Fig. 1 dargestellt, kann der Grundkörper 32 einen kreisförmigen Querschnitt haben, im Wesentlichen konstant über seine Länge. In anderen Ausführungsformen könnte der Ankerabschnitt 30 auch einen rechteckigen, dreieckigen, ... Querschnitt haben. Ebenfalls in anderen Ausführungsformen könnte der Grundkörper 32 nicht konstant über seine Länge sein.

Die zweite Endportion 36 des Ankerabschnitts ist vorzugsweise rund, aber es könnten andere Formen von Endportionen vorgesehen sein. Zum Beispiel kann die zweite Endportion 36 mit geschnittener Kante vorgesehen sein.

Der Ankerabschnitt 30 ist vorzugsweise aus Stahl. Andere Metalle wie zum Beispiel Aluminium oder andere Materialien können ebenfalls benutzt werden.

Der Flanschabschnitt 28 erstreckt sich von der ersten Endportion 34. Der Flanschabschnitt 28 ist beispielsweise kreisförmig und konzentrisch zu einer Flanschachse Xfl ausgerichtet.

Das Fügebauteil 24 weist eine Fügefläche 38 auf. Diese Fügefläche 38 ist vorzugsweise aus einem metallischen Werkstoff. Die Fügefläche 38 ist beispielsweise auf dem Flanschabschnitt 28 vorgesehen. Die Fügefläche 38 weist einen Auftragungsabschnitt 40 auf. Der Auftragungsabschnitt 40 ist geeignet, um ein Fügematerial 26 zu empfangen.

Der Auftragungsabschnitt 40 wird mit dem Fügematerial, überdeckt. Das Fügematerial 26 ist ein Klebstoff, der auf den Auftragungsabschnitt 40 (bzw. auf die Fügefläche 38) aufgebracht wird. Das Fügematerial 26 kann ein Klebstofftropfen sein, aber andere Formen können auch vorgesehen sein.

Wie in Fig. 2 und Fig. 3 dargestellt, wird das Befestigungselement 12 von der Halteeinrichtung 16 aufgenommen. Insbesondere wird der Ankerabschnitt 30 des Befestigungselements 12 von der Halteeinrichtung 16 aufgenommen.

Die Halteeinrichtung 16 kann einen Befestigungshalter 42 aufweisen, wie bereits in Fig. 2 dargestellt. Der Befestigungshalter 42 ist drehbar in einem Gehäuse der Fügevorrichtung 10 gelagert. Der Befestigungshalter 42 weist eine Öffnung 44 auf, um den Ankerabschnitt 30 des Befestigungselements 12 aufzunehmen. Die Anbindung des Befestigungselements 12 (bzw. des Ankerabschnitts 30) mit dem Befestigungshalter 42 kann über Formschluss erfolgen. Beispielsweise kann die Öffnung 44 eine Mehrkantaufnahme aufweisen, und der Ankerabschnitt 30 wird in dieser Aufnahme befestigt. Die Anbindung des Befestigungselements 12 (bzw. des Ankerabschnitts) mit dem Befestigungshalter 42 kann auch reibschlüssig erfolgen.

In einer weiteren Ausführungsform kann die Halteeinrichtung einen Ladestift aufweisen (siehe Fig. 3). Der Ladestift ist um die Fügeachse Xf drehbar.

Die in Fig. 2 und Fig. 3 dargestellten Fügevorrichtungen 10 weisen ferner eine Heizeinrichtung 46 auf. Die Heizeinrichtung 46 weist beispielsweise eine Induktionsspule auf, um eine Erwärmung des Befestigungselements 12 über Induktion durchzuführen. Beispielsweise kann ein Magnetfeldformer um das Befestigungselement oder um den Ankerabschnitt vorgesehen sein. In weiteren Ausführungsformen können die Erwärmung des Befestigungselements 12 über Infrarot, Heißluft, Ultraschall oder andere Heizquellen erfolgen.

Die Halteeinrichtung 16 bewegt das Befestigungselement 12 auf das Werkstück 14. Das Werkstück 14 weist beispielsweise eine Trägerfläche 48 auf und die Halteeinrichtung 16 bringt das Befestigungselement 12 auf der Trägerfläche 48. Insbesondere wird der Flanschabschnitt 28 auf die Trägerfläche 48 aufgebracht, so dass das Fügematerial 26 in Kontakt mit der Trägerfläche 48 ist.

Das Fügematerial 26 weist ein erstes und ein zweites anderes Klebstoffmaterial 50, 52 auf, wie in Fig. 4a und Fig. 4b dargestellt. Das zweite Klebstoffmaterial 52 wird auf dem Auftragungsabschnitt aufgetragen und das erste Klebstoffmaterial 50 überdeckt das zweite Klebstoffmaterial 52. Das zweite Klebstoffmaterial 52 ist zwischen dem Auftragungsabschnitt 40 und dem ersten Klebstoffmaterial 50 eingeschlossen.

Das zweite Klebstoffmaterial 52 kann beispielsweise auf dem Flanschabschnitt 28 zentriert sein. Das zweite Klebstoffmaterial 52 kann eine Tropfenform oder eine Strangform haben; andere Formen sind auch möglich. Beispielsweise kann das zweite Klebstoffmaterial 52 aus mehreren Tropfen bestehen, die alle von dem ersten Klebstoffmaterial 50 überdeckt werden. Die Tropfen können rund oder länglich ausgebildet sein. Das zweite Klebstoffmaterial 52 kann auch mit einem besonderen Muster wie ein Kreuz, U- oder L- förmig auf dem Auftragungsabschnitt aufgetragen sein.

Das zweite Klebstoffmaterial 52 ist beispielsweise ein Klebstoffhärter. Das zweite Klebstoffmaterial 52 kann auch ein Beschleuniger sein. Das zweite Klebstoffmaterial 52 kann flüssig, pastös oder fest sein. Allgemein wird das zweite Klebstoffmaterial 52 die Vernetzung eines ersten Klebstoffmaterials (z.B. eines Epoxidharzes) über Polyadditions-oder Polymerisationsreaktion bewirken. Das Volumen des zweiten Klebstoffmaterials kann von der Geometrie des Fügebauteils und/oder des Auftragungsabschnitts abhängen.

Das zweite Klebstoffmaterial 52 ist, wie bereits beschrieben, von dem ersten Klebstoffmaterial 50 überdeckt. Das erste Klebstoffmaterial 50, das das zweite Klebstoffmaterial 52 einschließt, ist beispielsweise ein Klebstoffharz. Das erste Klebstoffmaterial 50 kann ein Epoxidharz sein. Das Epoxidharz weist unterhalb der Vernetzungstemperatur einen festen Aggregatszustand auf und ist unter Wärmezufuhr aufschmelzbar.

Das erste Klebstoffmaterial 50 ist von außen sichtbar, während das zweite Klebstoffmaterial 52 von außen nicht sichtbar ist. Das zweite Klebstoffmaterial 52 bildet den Kern des Fügematerials 26 vor dem Fügeverfahren aus. Das erste Klebstoffmaterial 50 ist nach außen angeordnet.

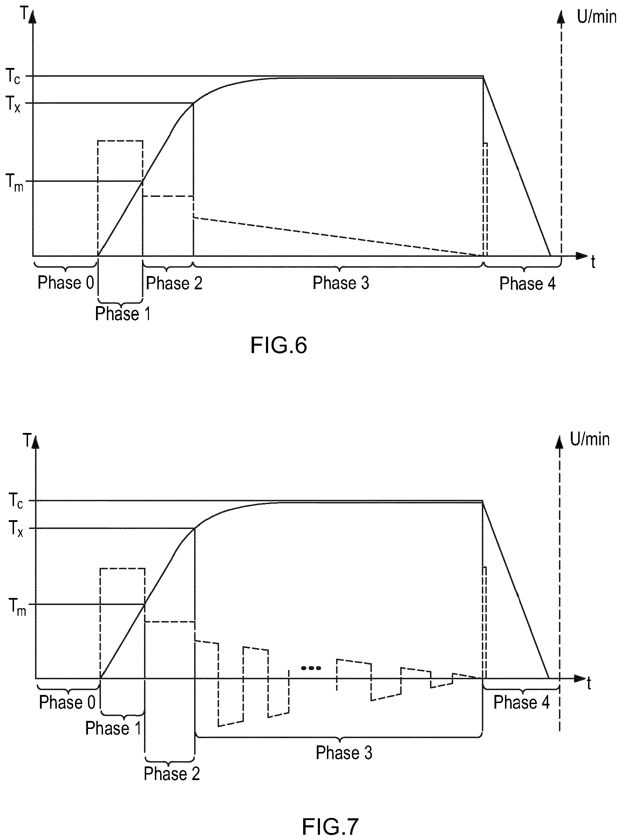

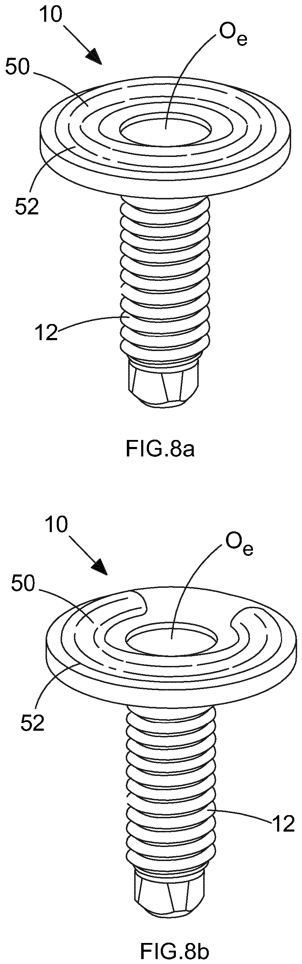

Wie in Fig. 8A und Fig. 8B dargestellt, kann das Fügematerial einen kreisförmigen (oder ringförmigen) Fügematerialstrang ausbilden. Der kreisförmige Fügematerialstrang kann um die Ankerachse Xa zentriert sein, oder bezüglich der Ankerachse Xa versetzt sein. Der kreisförmige Fügematerialstrang ist mit einer Innenwand, die eine zentrale Öffnung Oe begrenzt. Der kreisförmige Fügematerialstrang kann einen halbkreisförmigen Querschnitt haben. Das Fügematerial kann einen durchgehenden kreisförmigen Strang ausbilden, wie in Fig. 6A dargestellt, oder eine einmal oder mehrmals unterbrochenen Strang ausbilden. In Fig. 6B bildet das Fügematerial einen Kreisbogen aus, mit zwei Ende, die entfernt voneinander sind. Beispielsweise eine Aufnahme ist in der zentralen Öffnung Oe vorgesehen.

In Fig. 8A und Fig. 8B ist das zweite Klebstoffmaterial 52 (bzw. der Klebstoffhärter) in Form eines kreisförmigen Strangs aufgebracht. Das erste Klebstoffmaterial 50 ist dann auch in Form eines kreisförmigen Strangs aufgebracht, um das zweite Klebstoffmaterial 52 zu überdecken. Eine solche Fügematerialanordnung erlaubt eine gute Mischung und eine gute Verteilung des Fügematerials. Der Klebstoffstrang ist vorzugsweise von der Außenfläche des Flanschabschnitts entfernt. Das zweite Klebstoffmaterial 52 ist in der Mitte des ersten Klebstoffmaterials 50 angeordnet. Das zweite Klebstoffmaterial 52 und/oder das erste Klebstoffmaterial 50 haben beispielsweise einen halbkreisförmigen Querschnitt.

Eine Trennschicht 54 kann zwischen dem ersten Klebstoffmaterial 50 und dem zweiten Klebstoffmaterial 52 vorgesehen sein. Die Trennschicht 54 wird auf das zweite Klebstoffmaterial 52 aufgetragen und überdeckt das zweite Klebstoffmaterial 52.

Die Trennschicht 54 bildet eine physische Grenze zwischen dem ersten und zweiten Klebstoffmaterial 50, 52, um eine unerwünschte Mischung der beiden Klebstoffmaterialen 50, 52 zu vermeiden.

Nach dem Auftragen des zweiten Klebstoffmaterials 52 auf dem Auftragungsabschnitt 40 ist beispielsweise die Trennschicht 54 auf das zweite Klebstoffmaterial 52 aufgetragen.

Die Trennschicht 54 kann auf das zweite Klebstoffmaterial 52 durch eine Beflammung mit einem Silikatoxid (SiOx, z.B.Pyrosil^{®}) aufgebracht werden. Die Trennschicht 54 ist dann eine Silikatschicht. Eine Brennflamme wird vorzugsweise zügig über das zweite Klebstoffmaterial 52 geführt. Eine nur wenige Nanometer dicke aber dichte Silikatschicht scheidet sich beispielsweise auf dem Klebstoffhärter ab und ermöglicht eine physische Trennung zum anschließend aufgetragenen Klebstoffharz. Da eine äußerst kurze Exposition mit der Beschichtungsflamme genügt, ist nur ein mäßiger Temperaturanstieg zu erwarten.

In einer anderen Ausführungsform könnte mittels Plasmabeflammung oder Plasmapolymerisation eine dünne Polymerschicht auf das zweite Klebstoffmaterial abgeschieden werden. Dieses Verfahren ist ein dem Pyrosil-Beflammen sehr ähnliches Verfahren mit noch geringerer thermischer Belastung.

Die Trennschicht 54 kann auch durch Bepudern mit einem Füllstoff hergestellt werden. Ein Sol-Gel-Prozess, PVD (Physical Vapour Deposition), CVD (Chemical Vapour Deposition), thermisches Spritzen oder Kaltgasspritzen können ebenfalls für die Trennschicht vorgesehen sein.

Allgemein ist jedes Verfahren zur Abscheidung einer Dünnschicht von Polymer, Metall oder anorganischer Stoffe geeignet, sofern die thermische Belastung gering gehalten wird.

Die Heizeinrichtung 46 kann das Befestigungselement 12 erwärmen. Beispielsweise wird die Heizeinrichtung 46 den Flanschabschnitt 28 und/oder den Ankerabschnitt erwärmen, um das Fügematerial indirekt zu erwärmen. Die Heizeinrichtung 46 könnte auch das Fügematerial 26 direkt erwärmen. Das Werkstück 14 kann auch erwärmt werden, um das Fügematerial 26 indirekt zu erwärmen.

Im vorliegenden Fall erfolgt die Erwärmung des Fügematerials 26jedoch dadurch, dass die Heizeinrichtung 46 das Fügebauteil 24 erwärmt, und zwar durch einen Wärmeübergang. Ferner findet eine Erwärmung des Fügematerials 26 durch einen Wärmeübergang innerhalb des Fügebauteils 24 statt. Es versteht sich, dass das Fügebauteil 24 in diesem Fall vorzugsweise gut wärmeleitend ausgebildet ist, also beispielsweise aus einem metallischen Material hergestellt ist oder aus einem Kunststoffmaterial mit darin eingeschlossenen wärmeleitenden (metallischen) Partikeln.

In der in Fig. 2 und Fig. 3 dargestellten Fügevorrichtung 10 kann insbesondere der Flanschabschnitt 28 und/oder der Ankerabschnitt 30 erhitzen und das Fügematerial 26 durch die Erwärmung des Flanschabschnitts 28 und/oder der Ankerabschnitts 30 erwärmen. Die Erwärmung des Fügematerials 26 kann vor oder nach dem Kontakt des Befestigungselements 12 mit dem Werkstück 14 erfolgen.

Die Heizeinrichtung 46, die das Fügebauteil 24 erwärmt, kann eine erste Heizeinrichtung 46 sein, und eine zweite Heizeinrichtung 56 kann vorgesehen sein, um das Werkstück 12 zu erwärmen (wie unten beschrieben).

Beispielsweise wird in einem ersten Schritt das Befestigungselement 12 in Kontakt mit der Trägerfläche 48 gebracht.

In einem zweiten Schritt erhitzt die erste Heizvorrichtung 46 (beispielsweise ein Induktor) das Befestigungselement 12 (bzw. das Fügebauteil 24). Das Befestigungselement 12 (bzw. das Fügebauteil 24) wird über die Schmelzpunkte Tm des ersten und zweiten Klebstoffmaterials 50, 52 erwärmt. Das Fügematerial 26 schmilzt.

Das Befestigungselement 12 wird dann durch die Halteeinrichtung 16 unter definiertem Anpressdruck auf der Trägerfläche zum Rotieren gebracht. Durch die Drehung vermengen sich das geschmolzene erste und zweite Klebstoffmaterial 50, 52. Die Drehung des Befestigungselements 12 erfolgt um die Fügeachse Xf. Die Fügeachse Xf und/oder die Ankerachse Xa und/oder die Flanschachse Xfl können übereinstimmen.

Die Vermischung des Fügematerials 26 erfolgt durch eine kombinierte Bewegung aus Scherung an dem Auftragungsabschnitt 40 und das Ausquetschen des Fügematerials 26 während des Aufsetzens auf das zu beklebende Werkstück 14. Die Vermischung (bzw. Durchmischung) kann durch eine geeignete Oberflächenstruktur bzw. -geometrie des Auftragungsabschnitts 40 verbessert werden. Es können mehrere verschiedene Oberflächenstrukturen können vorgesehen sein.

Wenn eine Trennschicht 54 vorgesehen ist, wird sich zunächst die Trennschicht 54 durch die Erwärmung des Fügematerials 14 auflösen. Dadurch werden die beiden Klebstoffmaterialien (beispielsweise Klebstoffhärter 50 und Klebstoffharz 52) in Kontakt sein und sich mischen.

Eine retentive Oberflächenstruktur mit Materialhinterschneidungen bildenden Erhebungen kann zum Beispiel auf dem Auftragungsabschnitt ausgebildet sein. Die Herstellung von Materialhinterschneidungen auf der Fügefläche 38 ist vorzugsweise in DE102014118973 beschrieben. Mikroskopisch kleine emporragende Schmelzerstarrungen können beispielsweise im Rahmen einer Oberflächenreinigung mittels energiereicher fokussierter Strahlung eingebracht werden. Retentive Strukturen können entweder vollflächig, partiell oder im Winkel zur Relativbewegung gerichtet erzeugt werden.

Vertiefungen in dem Flanschabschnitt 28 (bzw. in dem Auftragungsabschnitt 40) können auch benutzt werden, um die Vermischung zu verbessern. Während der Flanschabschnittherstellung können Vertiefungen und Nuten 58 eingepresst werden, die winklig zur Rotationsrichtung angeordnet sein können. Nuten und Vertiefungen 58 sind lediglich bei partieller oder gerichteter Anordnung im Winkel zur Relativbewegung wirksam.

Fig. 5a bis Fig. 5d stellen verschiedene Oberflächenstrukturen 60 für retentive Oberflächenstruktur oder Vertiefungen (bzw. Nuten) dar. Solche Oberflächenstrukturen beeinflussen Flüssigkeitsbewegungen. Die Verteilung von möglichen Kontaminationen wird verbessert. Die verschiedenen Oberflächenstrukturen 60 dienen primär einer erhöhten Scherwirkung zur Verbesserung der Klebstoffdurchmischung bei rotierendem Befestigungselement. Die Bewegung des geschmolzenen Fügematerials wird verbessert.

Die in Fig. 5a und Fig. 5c dargestellten Oberflächenstrukturen 60 weisen mehrere Segmente 62 auf, die zusammen einen Stern ausbilden. Die Segmente 62 sind um einen bestimmten Winkel um einen Mittelpunkt voneinander beabstandet.

Die in Fig. 5b und Fig. 5d dargestellten Oberflächenstrukturen weisen mehrere Kurven 64 auf, die zusammen einen Stern aufbauen. Die Kurven 64 sind um einen bestimmten Winkel um einen Mittelpunkt voneinander beabstandet.

Der Mittelpunkt 66 in Fig. 5c und in Fig. 5d ist frei von jeglicher retentiven Oberflächenstruktur oder Vertiefung. Die dargestellten Strukturen (entweder als retentive Oberflächenstrukturen oder als Vertiefungen hergestellt) beeinflussen die Bewegung von Medien und erlauben eine verbesserte Mischung des Fügematerials.

Weiterhin können solche Oberflächenstrukturen das Fügematerial 26 auf dem Auftragungsabschnitt 40des Befestigungselements 12 vor dem Fügeverfahren besser verklammern.

In einer anderen Ausführungsform könnten das erste und zweite Klebstoffmaterial 50, 52 durch die Drehung des Befestigungselements und die Reibung des Fügematerials 26 auf der Trägerfläche 48 erhitzt werden und schmelzen.

Unter weiterer Wärmezufuhr vernetzt das Fügematerial 26. Das Fügematerial 26 wird weiter erwärmt durch die erste Heizeinrichtung 46 und/oder durch die zweite Heizeinrichtung 56 und/oder durch eine weitere Heizvorrichtung. Die Rotationsbewegung wird während der Vernetzung gestoppt. Im vorliegenden Fall erfolgt die Weitererwärmung des Fügematerials 26 durch die erste Heizeinrichtung 46.

In einer anderen Ausführungsform kann die Rotationsbewegung der Halteeinrichtung 16 weiter laufen (zum Beispiel mit einem geringeren Drehmoment). Beispielsweise wird die Rotationsbewegung oszillierend erfolgen. Das Befestigungselement 12, und insbesondere der Ankerabschnitt kann dann in der Aufnahme der Halteeinrichtung 16 rutschen, sobald die Vernetzung fertig ist, wie weiter unten beschrieben. Gemäß einer anderen Ausführungsform wird der Motor 20 über den formschlüssigen Eingriff zwischen Befestigungselement 12 und Halteeinrichtung 16 in seiner Bewegung blockiert.

Nach der Vernetzung wird das Befestigungselement 12 von der Halteeinrichtung 16 freigegeben.

Die Vermischung des Fügematerials 26 direkt vor dem Fügen ermöglicht eine extrem verlängerte Lagerstabilität des Befestigungselements 12 vor dem Fügeverfahren.

Das Befestigungselement 12 kann gelagert werden und ist transportierbar, bspw. von einem Ort der Herstellung zu einem Ort, an dem das Befestigungselement 12 auf das Werkstück zu kleben ist, ohne Kühlung oder andere ähnliche Berücksichtigung.

Das Werkstück 14 und die Trägerfläche 48 können Kontaminationen aufweisen. Zum Beispiel können die Kontaminationen adhäsionshemmende Öle, Schmierstoffe, Lacke, Beschichtungen, oder andere unerwünschte Partikel, die auf der Trägerfläche bleiben. Heutzutage werden solche Kontaminationen in einem vorherigen Schritt von dem Werkstück 14 entfernt, um die Fügeergebnisse nicht zu schlechteren. Die Drehung des Befestigungselements 12 erlaubt, diesen Reinigungsschritt während der Drehung durchzuführen und damit Zeit zu sparen.

Während der Drehung des Befestigungselements 12 kann das Fügematerial 26 als Reinigungsmedium der Trägerfläche 48 benutzt werden. Insbesondere kann das Fügematerial 26 abrasiv sein und die Reibung des Fügematerials 26 auf der Trägerfläche 48 während der Drehung des Befestigungselements 12 für die Vermischung des Fügematerials 26 kann die Trägerfläche 48 reinigen. Die Kontaminationen (adhäsionshemmenden Öle, ...) werden in dem Fügematerial 26 absorbiert und verteilt, wo sie keinen signifikanten nachteiligen Einfluss (z.B. auf die Adhäsion des Befestigungselements) haben. Die Drehung des Befestigungselements12 wird dann zum Vermischen und zur Verteilung von Kontaminationen benutzt.

Die Fig. 6 und Fig. 7 stellen zwei verschiedene Ausführungsformen des Fügeverfahrens in Abhängigkeit von der Zeit dar. Mit der Fügevorrichtung 10 lässt sich ein Fügevorgang wie folgt durchführen.

Das in Fig. 6 dargestellte Fügeverfahren weist verschiedene Schritte auf.

In einem ersten Schritt (Phase 0) kann das Werkstück vorbereitet werden. Beispielsweise findet eine Vorwärmung des Werkstücks dar.

Nach dem ersten Schritt wird die Heizeinrichtung 16 eingeschaltet. Die Heizeinrichtung 16 wird direkt oder indirekt das Fügematerial 26 bis zum Schmelzpunkt des ersten und/oder zweiten Klebstoffmaterials 50, 52 erwärmen (in Praktisch bis zum höheren Schmelzpunkt des ersten und zweiten Klebstoffmaterials 50, 52). Ein Temperatursensor 68 misst die Temperatur des Fügematerials und/oder des Flanschabschnitts 28 und/oder der Trägerfläche 48 und/oder des Werkstücks 14 messen. Die Temperaturmessung kann beispielsweise durch Infrarot oder durch andere bekannte Methoden erfolgen. Der Temperatursensor 68 kann ein Pyrometer sein. In einer anderen, nicht erfindungsgemäßen Ausführungsform könnte die Temperatur durch die Steuerung der Heizeinrichtung berechnet werden. Ein Pyrometer kann vorgesehen sein, um die Temperatur zu regeln.

.Die Temperatur des Fügematerials wird erhöht. Die Temperatur des Fügematerials wird entsprechend eine Aufheizrampe bis zu der Vernetzungstemperatur des Fügematerials 26 steigen (Phase 1 und Phase 2).

Am Anfang der Aufheizrampe wird das Befestigungselement 12 mit dem Werkstück in Kontakt gebracht. Es wird eine Drehung des Befestigungselements durchgeführt, um das Befestigungselement in formschlüssigen Eingriff mit dem Bolzenhalter zu bringen und/oder die Trägerfläche 48 zu reinigen (Phase 1). Das Herstellen des formschlüssigen Eingriffs und die Reinigung werden mit einer ersten Rotationsgeschwindigkeit r"1 des Befestigungselements durchgeführt.

Immer noch während der Aufheizrampe, nach dem Aufsetzten des Befestigungselements und der Herstellung des formschlüssigen Kontaktes zwischen Befestigungselement und Bolzenhalter wird die Mischungsphase (Phase 2) stattfinden. Beispielsweise wird die Mischungsphase durchgeführt wenn die Temperatur des Fügematerials die Schmelzpunkte Tm des ersten und zweiten Klebstoffmaterials 50, 52 erreicht hat. Die Reinigung kann während der Phase 2 weiter durchgeführt werden. Die Mischung wird mit einer zweiten Rotationsgeschwindigkeit r"2 des Befestigungselements durchgeführt. Die zweite Rotationsgeschwindigkeit r"2 kann höher oder geringer als die erste Rotationsgeschwindigkeit r"1 sein.

Wenn die Aufheizrampe eine bestimmte Temperatur Tx kurz unterhalb der Vernetzungstemperatur erreicht, werden das Drehmoment auf dem Befestigungselement und die Rotationsgeschwindigkeit reduziert (Anfang von Phase 3). Mit zunehmender Klebstoffvernetzung wird das Drehmoment proportional zur Verfahrenszeit sinken, da die steigende Viskosität des Fügematerials die Motorbewegung zunehmend behindert.

Sobald die Temperatur des Fügematerials 26 die Vernetzungstemperatur Tc erreicht hat, wird die Temperatur bis zu der kompletten Vernetzung des Fügematerials gehalten (Ende von Phase 3).

Während der Vernetzungsphase (wenn die Temperatur konstant und gleich der Vernetzungstemperatur ist) wird das Drehmoment weiter sinken bis zum Stillstand, da die steigende Viskosität des Fügematerials die Motorbewegung zunehmend behindert. (Ende von Phase 3 - Anfang von Phase 4). Gleichzeitig mit dem Erreichen des Stillstands des Befestigungselements wird die Heizeinrichtung das Fügematerial nicht mehr heizen, und die Temperatur des Fügematerials sinkt.

Statt einer Drehmomentbeaufschlagung während der isothermen Vernetzung in Phase 3 kann auch nach einer definierten Zeitspanne zu Beginn von Phase 4 eine kurze Drehbewegung der Halteeinrichtung (während der Phase 4) aufgebracht werden, um die Festigkeit der Verbindung zwischen Befestigungselement 12 und Werkstück 14 zu überprüfen. Wenn das Befestigungselement sich nicht mehr dreht ist das Befestigungselement richtig mit dem Werkstück verklebt.

In Fig. 7 ist die Temperaturkurve des Fügematerials ähnlich wie die in Fig. 6 bereits beschrieben. Die Drehmomentbeaufschlagung ist auch gleich wie die in Fig. 6 bereits beschriebenen Phase 0, Phase1 und Phase 2. Nach der Mischung und Reinigungsphase wird eine alternative Drehmomentbeaufschlagung (Phase 3) aufgebracht, die das Befestigungselement um die Fügeachse Xf in die eine Richtung und dann in die andere Richtung dreht. Die Rotationsbewegung erfolgt oszillierend. Die Amplitude der Drehbewegung wird durch die zunehmende Viskosität des Fügematerials mit fortschreitender Vernetzung und die dadurch zunehmende Bewegungsbehinderung geringer, bis letztlich Stillstand erreicht wird.

Statt einer Drehmomentbeaufschlagung während der isothermen Vernetzung in Phase 3 kann auch nach einer definierten Zeitspanne zu Beginn von Phase 4 eine kurze Drehbewegung der Halteeinrichtung (während der Phase 4) aufgebracht werden, um die Festigkeit der Verbindung zwischen Befestigungselement 12 und Werkstück 14 zu überprüfen. Wenn das Befestigungselement sich nicht mehr dreht ist das Befestigungselement richtig mit dem Werkstück verklebt.

Anschließend wird die Halteeinrichtung 16 das nunmehr auf das Werkstück 14 gefügte Befestigungselement freigeben. Anschließend kann von der Halteeinrichtung 16 ein weiteres Befestigungselement 12 aufgenommen werden, das auf ein weiteres Werkstück 14 zu fügen ist.

## Patentansprüche

1. Fügeverfahren mit den Schritten:
- Bereitstellen eines Befestigungselements (12) mit:
∘ einem schaftförmigen Ankerabschnitt (30), der sich zwischen einer ersten und einer zweiten Endportion entlang einer Ankerachse (Xa) erstreckt, und
∘ einem quer zum Ankerabschnitt verlaufenden Flanschabschnitt (32), wobei der Flanschabschnitt (32) an der ersten Endportion des Ankerabschnitts ausgebildet ist, wobei der Flanschabschnitt (32) mindestens teilweise einen Auftragungsabschnitt (40) ausbildet,
∘ einem Fügematerial (26), wobei das Fügematerial auf den Auftragungsabschnitt (40) vorappliziert ist, wobei das Fügematerial (26) in mindestens teilweise festem Zustand auf dem Auftragungsabschnitt liegt,
- Bereitstellen eines Werkstücks (14), wobei das Werkstück (14) eine Trägerfläche (48) aufweist,
- Aufsetzen des Befestigungselements (12) auf die Trägerfläche des Werkstücks (14),
- Fügen des Befestigungselements (12) mit dem Werkstück durch die Vernetzung des Fügematerials, wobei das Fügematerial (26) vermischt wird, und dass das Vermischen des Fügematerials durch eine Drehung des Befestigungselements (12) gegenüber dem Werkstück (14) durchgeführt wird,
**dadurch gekennzeichnet, dass** vor dem Fügen das Fügematerial ein erstes Klebstoffmaterial und ein zweites anderes Klebstoffmaterial (50, 52) aufweist, wobei vor dem Fügen das erste Klebstoffmaterial das zweite Klebstoffmaterial vollständig überdeckt,
dass eine Heizeinrichtung (46) das Fügematerial vor und/oder nach und/oder während der Drehung erwärmt,
und dass ein Temperatursensor (68) die Temperatur des Fügematerials und/oder des Flanschabschnitts (28) und/oder der Trägerfläche (48) und/oder des Werkstücks (14) misst.

2. Fügeverfahren nach Anspruch 1, wobei das Befestigungselement (12) um die Ankerachse (Xa) gedreht wird.

3. Fügeverfahren nach Anspruch 1 oder Anspruch 2, wobei das Befestigungselement (12) in einer Halteeinrichtung (16) aufgenommen wird, und wobei die Halteeinrichtung (16) das Befestigungselement (12) auf der Trägerfläche (48) des Werkstücks (14) positioniert.

4. Fügeverfahren nach einem der Ansprüche 1 ― 3, wobei das Befestigungselement (12) in einer Halteeinrichtung (16) aufgenommen wird, und wobei die Drehung des Befestigungselements (12) gegenüber dem Werkstück (14) durch die Halteeinrichtung (16) geführt wird.

5. Fügeverfahren nach einem der Ansprüche 1 ― 4, wobei das Fügematerial (26) vor der Drehung erwärmt wird, um das Fügematerial (26) zu schmelzen.

6. Fügeverfahren nach Anspruch 5, wobei der Ankerabschnitt (30) und der Flanschabschnitt (32) ein Fügebauteil (24) ausbilden, wobei die Erwärmung des Fügematerials das Erwärmen des Fügebauteils (24) und/oder des Werkstücks (14) beinhaltet, wobei eine Wärmeleitung von dem Fügebauteil (24) und/oder von dem Werkstück (14) in das Fügematerial (26) erfolgt.

7. Fügeverfahren nach Anspruch 5 und 6, wobei das Fügematerial (26) über die Schmelzpunkte des ersten und zweiten Klebstoffmaterials (50, 52) erwärmt wird.

8. Fügeverfahren nach einem der Ansprüche 1 ― 7, wobei die Trägerfläche (48) Kontaminationen aufweist, und wobei die Kontaminationen (48) während der Drehung des Befestigungselements (12) gegenüber des Werkstücks in dem Fügematerial (26) verteilt werden, so dass die Trägerfläche (48) gereinigt wird.

9. Fügeverfahren nach einem der Ansprüche 1 ― 8, wobei das Fügematerial (26) nach dem Vermischen weiter bis zu einer Vernetzungstemperatur erwärmt wird, um die Vernetzung des Fügematerials durchzuführen.

10. Fügeverfahren nach einem der Ansprüche 1 ― 9, wobei ein Drehmoment auf das Befestigungselement (12) während der Vernetzung bis zum Stillstand des Befestigungselements (12) weiter ausgeübt wird.

11. Fügeverfahren nach einem der Ansprüche 1 ― 10, wobei die Drehung des Befestigungselements (12) gegenüber dem Werkstück (14) vor dem Fügen gestoppt wird.

## Claims

1. Method for joining comprising the steps of:
- providing a fastening element (12) with:
∘ a shaft-shaped anchor section (30) which extends between a first end section and a second end section along an anchor axis (Xa);
∘ a flange section (32) formed on and extending radially to the first end section of the anchor section, and the flange section (32) at least partially forms an application section, and;
∘ a joining material (26), wherein the joining material is pre-applied to the application section, wherein the joining material (26) is lying on the application section in an at least partially solid state,;
- providing a workpiece (14), wherein the workpiece (14) includes a carrier surface (48);
- arranging the fastening element (12) on the carrier surface of the workpiece (14),
- joining the fastening element (12) to the workpiece via cross-linking reaction of the joining material, wherein the joining material is mixed and the mixing occurs by rotating the fastening element relative to the workpiece,
**characterized in that** before the joining step, the joining material includes a first adhesive material and a second adhesive material (50, 52) the fastening material comprises a first adhesive material and the second adhesive material, wherein before the joining step the first adhesive material fully covers the second adhesive material, **in that** a heating device (46) heats the joining material before and/or after and/or during the rotation, and **in that** temperature sensor (68) measures the temperature of the joining material and/or the flange section (28) and/or the carrier surface (48) and/or the workpiece (14).

2. Method of joining according to claim 1, wherein the fastening element (12) is rotated around the anchor axis (Xa).

3. Method of joining according to claim 1 or claim 2, wherein the fastening element (12) is arranged in a holding device; and wherein
the holding device (16) moves the fastening element (12) to the carrier surface (48) of the workpiece (14).

4. Method of joining according to any of claims 1 to 3, wherein the fastening element (12) is arranged in a holding device, and wherein the rotating of the fastening element (12) relative to the workpiece is guided by the holding device (16).

5. Method of joining according to any of claims 1 to 4, wherein the joining material (26) is heated before the rotation, in order to melt the joining material (26)..

6. Method of joining according to claim 5, wherein the anchor section (30) and the flange section (32) form a joining component (24), wherein the heating of the joining material includes the heating of the joining component (24) and/or of the workpiece (14), wherein there is thermal conduction of the joining component (24) and/or of the workpiece (14) into the joining material (26).

7. Method of joining according to claim 5, where, the joining material (26) is heated above the melting points of the first and second adhesive materials (50, 52).

8. Method of joining according to any of claims 1 to 7, wherein the carrier surface (48) includes a contaminant, and wherein the contaminant is distributed in the joining material (26) during the step of rotating the fastening element (12) relative to the workpiece, so that the carrier surface (48) is cleaned.

9. Method of joining according to any of claims 1 to 8, wherein the joining material (26), after the step of mixing, is further heated to a cross-linking temperature after the mixing, in order to carry out the cross-linking of the joining material.

10. Method of joining according to any of claims 1 to 9, wherein a torque is applied to the fastening element (12) during the cross-linking, until the fastening element (12) reaches a standstill.

11. A method of joining according to any of claims 1 to 10, wherein the rotating of the fastening element (12) relative to the workpiece (14) is stopped before the joining.

## Revendications

1. Procédé d'assemblage avec les étapes suivantes :
- la fourniture d'un élément de fixation (12) avec :
- une section d'ancrage (30) en forme de tige, qui s'étend entre une première et une seconde portion d'extrémité le long d'un axe d'ancrage (Xa), et
- une section de bride (32) s'étendant transversalement à la section d'ancrage, dans lequel la section de bride (32) est réalisée au niveau de la première portion d'extrémité de la section d'ancrage, dans lequel la section de bride (32) réalise au moins partiellement une section d'application (40),
- un matériau d'assemblage (26), dans lequel le matériau d'assemblage est préappliqué sur la section d'application (40), dans lequel le matériau d'assemblage (26) se trouve dans un état au moins partiellement fixe sur la section d'application,
- la fourniture d'une pièce (14), dans lequel la pièce (14) présente une surface porteuse (48),
- le placement de l'élément de fixation (12) sur la surface porteuse de la pièce (14),
- l'assemblage de l'élément de fixation (12) avec la pièce par la réticulation du matériau d'assemblage, dans lequel le matériau d'assemblage (26) est mélangé, et que le mélange du matériau d'assemblage est réalisé par une rotation de l'élément de fixation (12) par rapport à la pièce (14),
**caractérisé en ce qu'**avant l'assemblage le matériau d'assemblage présente un premier matériau de colle et un second autre matériau de colle (50, 52), dans lequel avant l'assemblage le premier matériau de colle recouvre complètement le second matériau de colle,
qu'un dispositif de chauffage (46) chauffe le matériau d'assemblage avant et/ou après et/ou pendant la rotation,
et qu'un capteur de température (68) mesure la température du matériau d'assemblage et/ou de la section de bride (28) et/ou de la surface porteuse (48) et/ou de la pièce (14).

2. Procédé d'assemblage selon la revendication 1, dans lequel l'élément de fixation (12) est tourné autour de l'axe d'ancrage (Xa).

3. Procédé d'assemblage selon la revendication 1 ou la revendication 2, dans lequel l'élément de fixation (12) est reçu dans un dispositif de retenue (16), et dans lequel le dispositif de retenue (16) positionne l'élément de fixation (12) sur la surface porteuse (48) de la pièce (14).

4. Procédé d'assemblage selon l'une quelconque des revendications 1-3, dans lequel l'élément de fixation (12) est reçu dans un dispositif de retenue (16), et dans lequel la rotation de l'élément de fixation (12) est menée par rapport à la pièce (14) par le dispositif de retenue (16).

5. Procédé d'assemblage selon l'une quelconque des revendications 1-4, dans lequel le matériau d'assemblage (26) est chauffé avant la rotation afin de faire fondre le matériau d'assemblage (26).

6. Procédé d'assemblage selon la revendication 5, dans lequel la section d'ancrage (30) et la section de bride (32) réalisent un composant d'assemblage (24), dans lequel le chauffage du matériau d'assemblage contient le chauffage du composant d'assemblage (24) et/ou de la pièce (14), dans lequel une conduction thermique du composant d'assemblage (24) et/ou de la pièce (14) est effectuée dans le matériau d'assemblage (26).

7. Procédé d'assemblage selon les revendications 5 et 6, dans lequel le matériau d'assemblage (26) est chauffé au-dessus des points de fusion du premier et second matériau de colle (50, 52).

8. Procédé d'assemblage selon l'une quelconque des revendications 1-7, dans lequel la surface porteuse (48) présente des contaminations, et dans lequel les contaminations (48) sont réparties pendant la rotation de l'élément de fixation (12) par rapport à la pièce dans le matériau d'assemblage (26) de sorte que la surface porteuse (48) soit nettoyée.

9. Procédé d'assemblage selon l'une quelconque des revendications 1-8, dans lequel le matériau d'assemblage (26) est davantage chauffé après le mélange jusqu'à une température de réticulation afin de réaliser la réticulation du matériau d'assemblage.

10. Procédé d'assemblage selon l'une quelconque des revendications 1-9, dans lequel un couple est davantage exercé sur l'élément de fixation (12) pendant la réticulation jusqu'à l'arrêt de l'élément de fixation (12).

11. Procédé d'assemblage selon l'une quelconque des revendications 1-10, dans lequel la rotation de l'élément de fixation (12) est arrêtée par rapport à la pièce (14) avant l'assemblage.
